# FASCICULE DE BREVET EUROPEEN

(11) **EP 1 343 716 B1**
(45) Date de publication et mention de la délivrance du brevet: **31.07.2013**
(21) Numéro de dépôt: 01995771.1
(22) Date de dépôt: 21.12.2001
(51) Int. Cl.: C01B 3/08

(54) **SYSTEME GENERATEUR D'HYDROGENE ET PROCEDE D'HYDRODESHALOGENATION**
SYSTEM ZUM ERZEUGEN VON WASSERSTOFF UND VERFAHREN ZUR HYDRODEHALOGENIERUNG
HYDROGEN GENERATING SYSTEM AND HYDRODEHALOGENATION METHOD

(30) Priorité: 21.12.2000 FR 0016799
(43) Date de publication de la demande: 17.09.2003
(73) Titulaire: RHODIA CHIMIE, 92512 Boulogne-Billancourt Cedex (FR)
(72) Inventeur: MARION, Philippe, F-69390 Vernaison (FR); ROSIER, Cécile, F-69510 Soucieu en Jarrest (FR)
(74) Mandataire: Colombet, Alain André
(86) Numéro de dépôt international: PCT/FR2001/004171
(87) Numéro de publication internationale: WO 2002/049957

(56) Documents cités:
- EP-A- 0 417 279
- US-A- 5 830 426
- DATABASE WPI Section Ch, Week 199528 Derwent Publications Ltd., London, GB; Class E36, AN 1995-213937 XP002170596 & RU 2 023 652 C (AS UKR MECH ENG PROBLEMS INST), 30 novembre 1994 (1994-11-30)
- PATENT ABSTRACTS OF JAPAN vol. 006, no. 219 (C-132), 2 novembre 1982 (1982-11-02) & JP 57 123802 A (MASAHIRO SUZUKI), 2 août 1982 (1982-08-02)
- PATENT ABSTRACTS OF JAPAN vol. 007, no. 143 (C-172), 22 juin 1983 (1983-06-22) & JP 58 055304 A (BUREN MASUTAA KK), 1 avril 1983 (1983-04-01)
- PATENT ABSTRACTS OF JAPAN vol. 1999, no. 11, 30 septembre 1999 (1999-09-30) & JP 11 157802 A (SUGINO MACH LTD), 15 juin 1999 (1999-06-15)

## Description

La présente invention a pour objet principal un système générateur d'hydrogène. Elle vise également un procédé de génération d'hydrogène et ses applications, notamment dans un procédé d'hydrodéshalogénation de composés organiques halogénés présents dans des milieux aqueux à purifier.

La présente invention se rapporte plus particulièrement à la dégradation catalytique de polluants, plus particulièrement des composés organiques halogénés volatils dits COHV comme le perchloroéthylène (PCE), le chlorure de vinyle (CV), le dichloroéthane (DCE), le dichloroéthylène, le chloroforme, le tétrachlorure de carbone, et le trichloroéthylène (TCE)...

Classiquement, ce type de dégradation est réalisé selon un procédé qui implique généralement une réduction de ces polluants à l'aide d'hydrogène, et ceci en présence d'un catalyseur dit d'hydrodéshalogénation, à base généralement de palladium fixé sur un support inorganique. Plus précisément, il est procédé à une déshalogénation réductrice des composants halogénés au cours de laquelle l'halogène est extrait de la molécule sous forme d'un ion halogéné libre en solution aqueuse et remplacé sur la molécule par un ion hydrogène. Ce type de réaction requiert donc une source d'électrons.

Deux alternatives sont aujourd'hui disponibles pour réaliser ce type de réaction.

Selon une première variante, on utilise un métal de valence zéro, de préférence le fer, à titre de source d'électrons et source de métal pour la déshalogénation. Cette approche a pour avantage d'être relativement peu onéreuse mais en revanche présente les inconvénients d'être peu rapide et de ne pas convenir à tous les COHV et notamment au chlorure de vinyle.

La seconde alternative implique pour sa part l'utilisation d'un système catalytique plus élaboré et donc plus coûteux, qui requiert par ailleurs l'usage en parallèle d'une source continue en hydrogène. Généralement, cet hydrogène est introduit sous la forme d'hydrogène gazeux ou généré in situ à l'aide d'un complexe tel que l'hydrazine ou les borohydrures.
Il existe des systèmes de production d'hydrogène réalisés à partir de métaux comme l'aluminium ou le magnésium.
La demande RU2023662 décrit un procédé de production d'hydrogène contenant une composition à base d'aluminium et d'une poudre d'oxyde ferrique mélangés puis pressés.
La demande JP-57123802 décrit des particules d'un oxyde de métal dont la porosité est supérieure à 200 Mesh, qui sont incorporées à la surface du magnésium, par un moyen mécanique comme la pression ou une force de frottement. Le matériau résultant est alors mis en contact avec une solution neutre aqueuse de NaCl, KCl ou Na₂SO₄ ou de l'eau de mer pour la production d'hydrogène.
La demande EP-417279 décrit un procédé de production d'hydrogéne contenant une composition à base de dolomite calcinée et d'aluminium.

La présente invention a plus précisément pour objet de proposer une alternative aux alternatives évoquées précédemment et qui repose plus particulièrement sur l'utilisation d'un système générateur d'hydrogène original.

De manière inattendue, les inventeurs ont mis en évidence qu'il était possible de donner satisfaction simultanément en termes de coût et de cinétique, à l'aide d'un système générateur d'hydrogène qui implique notamment l'usage d'un métal de valence zéro comme ie fer, à titre de source en électrons.

Plus précisément, la présente invention a pour premier objet un système générateur d'hydrogène, caractérisé en ce qu'il associe à un métal, corrodable par l'eau, un matériau inorganique, ledit matériau possédant une surface spécifique propice à la fixation de la ou des formes oxydes et/ou hydroxydes dudit métal générées lors de sa corrosion.

Avantageusement, l'association d'un matériau inorganique au métal considéré à titre de source en électrons permet, en effet, d'accroître significativement la quantité en hydrogène généré comparativement à un procédé classique, c'est-à-dire ne mettant en oeuvre que le métal de valence zéro.

En ce qui concerne le métal de valence zéro, il possède un potentiel Redox suffisamment négatif pour pouvoir réduire l'eau.

A titre représentatif de métaux convenant à l'invention, on peut plus particulièrement citer l'acier, le fer, le zinc, l'aluminium, l'étain, le bismuth, le cobalt et le nickel.

De préférence, il s'agit du fer de valence zéro qui est particulièrement intéressant compte tenu de son faible coût.

En ce qui concerne le matériau inorganique, il est de préférence choisi parmi les oxydes métalliques, mixtes ou non, dans la mesure où ils sont bien entendu inertes dans les conditions de réaction.

A titre représentatif de ces oxydes, on peut plus particulièrement citer les alumines, les silices, les oxydes de zirconium, de cérium, de titane, de fer et les zéolithes.

Les matériaux inorganiques peuvent être utilisés sous différentes formes : poudre, produits mis en forme tels que granulés (par exemples cylindres ou billes), pastilles, monolithes (blocs en forme de nids d'abeilles) qui sont obtenus par extrusion, moulage, compactage ou tout autre type de procédé connu. En pratique, sur le plan industriel, ce sont les formes de granulés, de billes ou de monolithes qui présentent le plus d'avantages tant sur le plan de l'efficacité que sur le plan de la commodité de mise en oeuvre.

Les matériaux inorganiques possèdent une surface spécifique supérieure d'au moins un facteur de 100, et de préférence de 10⁴, à celle du métal, ce facteur pouvant s'élever jusqu'à une valeur de 10⁶.

Selon un mode préféré de l'invention, il s'agit d'une zéolithe synthétique ou naturelle.

Par zéolithe, on entend un tectosilicate cristallisé d'origine naturelle ou synthétique dont les cristaux résultent de l'assemblage tridimensionnel d'unités tétraédriques de SiO₄ et TO₄, T représentant un élément trivalent tel que aluminium, gallium, bore et fer, de préférence l'aluminium. Les zéolithes de type aluminosilicate sont les plus communes.

Parmi les zéolithes, on peut utiliser des zéolithes naturelles comme par exemple l'offrétite, la clinoptilotite, l'érionite, la chabazite, la philipsite.

Conviennent aussi les zéolithes synthétiques.

Comme exemples de zéolithes synthétiques à réseau monodimensionnel, on peut citer entre autres la zéolithe ZSM-4, la zéolithe ZSM-12, la zéolithe ZSM-22, la zéolithe ZSM-23, la zéolithe ZSM-48.

A titre d'exemples de zéolithes à réseau bidimensionnel que l'on utilise préférentiellement, on peut citer la zéolithe béta, la mordénite, la ferrierite.

On fait appel de préférence aux zéolithes synthétiques et plus particulièrement à ceux qui sont sous les formes suivantes :
- la mazzite de rapport molaire Si/Al de 3,4,
- la zéolithe L de rapport molaire Si/Al de 1,5 à 3,5,
- la mordénite de rapport molaire Si/Al de 5 à 15,
- la ferrierite de rapport molaire Si/Al de 3 à 10,
- l'offrétite de rapport.molaire Si/Al de 4 à 8,5,
- les zéolithes béta de rapport molaire Si/Al de 15 à 25,
- les zéolithes Y en particulier les zéolithes obtenues après traitement de désalumination (par exemple hydrotraitement, lavage à l'aide d'acide chlorhydrique ou traitement par SiCl₄), plus particulièrement les zéolithes US-Y de rapport molaire Si/Al supérieur à 3, de préférence compris entre 6 et 60,
- la zéolithe X de type faujasite de rapport molaire Si/Al de 0,7 à 1,5,
- les zéolithes ZSM-5 ou silicalite d'aluminium de rapport molaire Si/Al de 10 à 2000, et
- la zéolithe ZSM-11 de rapport molaire de 5 à 30.

De préférence, le matériau inorganique est une zéolithe possédant une surface spécifique supérieure à 10 m²/g.

Les deux zéolithes décrites dans les exemples ci-après s'avèrent à ce titre particulièrement intéressantes dans le cadre de présente invention.

En fait, sans vouloir se lier à une explication mécanistique spécifique, il semble que le matériau inorganique agit comme un support spécifique vis-à-vis des oxydes et/ou hydroxydes métalliques générés lors de l'oxydation du métal de valence zéro.

En effet, ces hydroxydes sont générés automatiquement lors de la réaction de l'eau sur le métal selon le schéma suivant :

M⁰ → Mn⁺ + ne⁻

2H₂O + 2e⁻ → H₂ + 2OH⁻

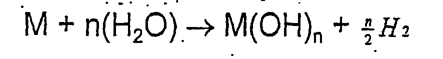

En se fixant préférentiellement sur le matériau inorganique et non à la surface du métal à l'état de valence zéro, les hydroxydes métalliques générés limitent ainsi significativement la désactivation de ce dernier.

C'est ainsi que dans le cas particulier où là génération d'hydrogène est réalisée en associant 3 g de fer pour 15 g d'eau, et en présence d'un support comme une zéolithe, la production d'hydrogène générée sur une période de 24 heures s'avère 250 fois plus importante que celle générée dans les mêmes conditions opératoires mais en l'absence dudit support.

Selon une variante privilégiée de l'invention, le métal de valence zéro et le matériau inorganique sont associés à raison de 0,5 à 40 %, et de préférence de 1 à 20 % en poids dudit matériau par rapport au poids du métal.

Cet ajustement entre les deux composés est bien entendu également fonction de la surface spécifique du matériau inorganique. Il est entendu que la quantité nécessaire en matériau inorganique est inversement proportionnelle à sa surface spécifique.

Selon une variante préférée, le métal de valence zéro n'est pas supporté par le matériau inorganique qui lui est associé. On peut également envisager que le matériau inorganique serve par ailleurs comme support pour un autre métal susceptible d'intervenir à titre de catalyseur pour une réaction consécutive ou concomitante à la génération d'hydrogène.

Le système générateur d'hydrogène revendiqué est particulièrement intéressant dans le domaine des traitements des effluents par exemple pour la réduction des COHV et/ou des nitrates, dans le domaine de la réduction des composés nitrés, aromatiques notamment. De manière générale, on peut en fait envisager son exploitation pour toute application nécessitant un apport continu en hydrogène.

La présente invention a également pour objet un procédé de génération d'hydrogène par réduction de l'eau à l'aide d'un métal convenable, caractérisé en ce que ladite réduction est réalisée au sein d'un milieu aqueux en présence d'une quantité suffisante d'un matériau inorganique dont là surface spécifique est propice au dépôt de la ou des formes oxydes et/ou hydroxydes du métal générées au cours de ladite réduction.

Bien entendu, le matériau inorganique et le métal répondent aux définitions présentées ci-dessus dans le cadre du système revendiqué.

Dans le procédé revendiqué, le matériau inorganique et le métal peuvent être directement introduits dans le milieu aqueux à traiter et l'ensemble est alors agité de manière à optimiser les conditions de génération de l'hydrogène.

Une autre variante du procédé peut consister à faire circuler le milieu aqueux à traiter à travers un lit fixe comprenant au moins ledit métal et le matériau inorganique.

La présente invention vise également l'utilisation dans un procédé de génération d'hydrogène par réduction de l'eau à l'aide d'un métal convenable, d'un matériau inorganique à des fins de fixation de la ou des formes oxydes et/ou hydroxydes dudit métal générées lors de la réduction.

La présente invention a également pour objet l'application d'un système de génération d'hydrogène tel que défini ci-dessus pour l'hydrodéshalogénation de composés organiques halogénés volatils au sein d'un milieu aqueux.

Plus précisément, elle propose un procédé pour l'hydrodéshalogénation de composés organiques halogénés volatils présents dans un milieu aqueux, caractérisé en ce qu'il met en oeuvre, une génération d'hydrogène par un système générateur d'hydrogène conforme à l'invention et une hydrodéshalogénation catalytique des composés organiques halogénés volatils à l'aide de l'hydrogène ainsi formé et d'un catalyseur convenable supporté.

De manière inattendue, les inventeurs ont en effet noté que l'effet bénéfique de la présence d'un matériau inorganique pour la génération d'hydrogène pouvait par ailleurs être exploité efficacement pour l'hydrodéshalogénation. Le fait de placer le catalyseur d'hydrodéshalogénation dans un environnement fortement enrichi en hydrogène permet d'accroître considérablement la cinétique d'hydrodéshalogénation. Cet aspect avantageux du procédé revendiqué ressort en particulier des exemples présentés ci-après.

Avantageusement, le matériau inorganique présent dans le système est utilisé en quantité telle que sa surface développée (c'est-à-dire totale) soit supérieure, de préférence d'au moins un facteur de 5, à la surface développée du matériau inorganique constituant le support du catalyseur d'hydrodéshalogénation. Une telle surface développée permet avantageusement de préserver dans le temps les performances catalytiques du métal composant le catalyseur d'hydrodéshalogénation.

En ce qui concerne le catalyseur d'hydrodéshalogénation, il comprend généralement à titre de métal, un métal choisi parmi le palladium, le nickel, le ruthénium, le platine et/ou le rhodium. De préférence, il s'agit du palladium.

Ce métal est également supporté sur un matériau inorganique. Ce matériau inorganique peut être choisi parmi ceux définis précédemment. De préférence, il s'agit d'une alumine ou d'une zéolithe.

A titre de catalyseur d'hydrodéshalogénâtion plus particulièrement préféré dans le cadre de l'invention, on peut citer le palladium fixé sur l'alumine.

On peut envisager que le support à la surface duquel est fixé le catalyseur d'hydrodéshalogénation assure simultanément la fonction du matériau inorganique impliqué dans la réaction de génération d'hydrogène. Selon cette variante, il s'avère possible de diminuer significativement la quantité en métal constituant le catalyseur supporté. Le métal constituant le catalyseur supporté peut alors être avantageusement utilisé à raison de 10 à 150 mmole/kmole du métal de valence zéro.

C'est ainsi que dans le cas particulier où le métal de valence zéro est du fer et le catalyseur supporté est du palladium/alumine, le procédé d'hydrodéshalogénation peut être avantageusement réalisé avec un rapport massique palladium/fer inférieur à 100 mg de palladium/kg de fer contre 500 à 5000 mg Pd/kgFer pour des procédés conventionnels.

Le procédé revendiqué peut s'appliquer à la réduction de tous les composés organiques représentés par les familles de solvants chlorés tel le trichloroéthylène, les aromatiques chlorés comme le chlorobenzène, les chlorophénols ou encore des produits de protection des plantes comme le Lindane™, le Dinoterbone^{™} et les nitro-composés.

Ainsi, le procédé d'hydrodéshalogénation revendiqué peut s'appliquer à la purification des nappes phréatiques dans une gamme de températures pouvant varier de 4 à 35°C. Il peut notamment être réalisé au sein, d'un réacteur.

Selon une variante préférée de l'invention, le système de génération d'hydrogène et le catalyseur d'hydrodéshalogénation sont séparés au sein du réacteur. Le métal de valence zéro et le matériau inorganique sont placés à la partie inférieure du réacteur, au niveau de laquelle on procède à l'introduction du milieu liquide à traiter. L'hydrogène généré dans cette partie inférieure se déplace alors vers la partie supérieure du réacteur où est placé le catalyseur d'hydrodéshalogénation.

Selon cet agencement, les oxydes et/ou hydroxydes métalliques formés lors de la génération de l'hydrogène se déposent préférentiellement sur le matériau inorganique présent dans le niveau inférieur du réacteur et non sur le catalyseur supporté d'hydrodéshalogénation. De cette manière, l'activité du catalyseur d'hydrodéshalogénation est optimisée et ses performances se maintiennent.

Les exemples figurant ci-après sont présentés à titre illustratif et non limitatif du domaine de l'invention.

Les supports testés dans les exemples ci-après sont deux zéolithes US-Y(4% de Na₂O₃ avec Si/Al de 2,5) (commercialisée par Engelhard) dite zéolithe A et une zéolithe HY-CBV 400 (2,5 % Na₂O₃ et Si/Al de 1,5 et une surface spécifique de 50 m²/g) (commercialisée par Zéolyst International) dite zéolithe B.

### EXEMPLE 1

On mélange 15 g d'eau, 3 g de fer et 300 mg d'une zéolithe A ou B. Après agitation sur une période de 24 heures, on note que, dans chacun des essais, la quantité d'hydrogène généré est 250 fois plus importante que la quantité d'hydrogène généré dans un essai témoin, c'est-à-dire en absence de zéolithe.

Elle est en effet de 16,5 ml/kg eau/heure contre 0,067 ml/kg eau/heure pour l'essai témoin.

### EXEMPLE 2

1,5 mg de trichloroéthylène est introduit sous forme d'une solution à environ 100 ppm dans 15 g d'eau. Sont également introduits dans cette solution, 3 g de fer et 30 mg d'un catalyseur Pd/Al₂O₃. Après 18 H 30 d'agitation, on atteint un taux de transformation de 30% du trichloroéthylène contre seulement un taux de transformation inférieur à 5% pour ce même système en absence dudit catalyseur.

Dans une variante de cet essai, la réaction est réalisée en présence de 300 mg d'alumine (alumine CBL commercialisée par Procatalyse).

Dans ces conditions, on atteint en 18 heures 30 un taux de transformation de 100%. Le seul produit de réaction observé est l'éthane.

## Revendications

1. Système générateur d'hydrogène, **caractérisé en ce qu'**il associe à un métal de valence zéro, corrodable par l'eau, un matériau inorganique, ledit matériau possédant une surface spécifique propice à la fixation de la ou des formes oxydes et/ou hydroxydes dudit métal générées lors de sa corrosion, la surface spécifique dudit matériau inorganique étant supérieure d'au moins un facteur 100 à celle du métal et ledit métal n'étant pas supporté par ledit matériau inorganique.

2. Système selon la revendication 1, **caractérisé en ce que** le métal possède un potentiel redox négatif.

3. Système selon la revendication 1 ou 2, **caractérisé en ce que** le métal est choisi parmi l'acier, le fer, le zinc, l'aluminium, l'étain, le bismuth, le cobalt et le nickel.

4. Système selon l'une des revendications précédentes, **caractérisé en ce que** ledit métal est le fer.

5. Système selon l'une des revendications précédentes, **caractérisé en ce que** le matériau inorganique est choisi parmi les oxydes métalliques mixtes ou non.

6. Système selon l'une des revendications précédentes, **caractérisé en ce que** le matériau inorganique est choisi parmi les alumines, les silices, les oxydes de zirconium, de cérium, de titane, de fer, et les zéolithes.

7. Système selon l'une des revendications précédentes, **caractérisé en ce que** le matériau inorganique est une zéolithe synthétique ou naturelle.

8. Système selon l'une des revendications précédentes, **caractérisé en ce que** le matériau inorganique est une zéolithe possédant une surface spécifique supérieure à 10 m²/g.

9. Système selon l'une des revendications précédentes, **caractérisé en ce que** le métal et le matériau inorganique sont associés à raison de 0.5 à 40% en poids dudit matériau par rapport au poids du métal.

10. Procédé de génération d'hydrogène par réduction de l'eau à l'aide d'un métal de valence zéro, corrodable par l'eau, **caractérisé en ce que** ladite réduction est réalisée au sein d'un milieu aqueux en présence d'une quantité suffisante d'un matériau inorganique dont la surface spécifique est propice au dépôt de la ou des formes oxydes et/ou hydroxydes du métal générées au cours de ladite réduction, la surface spécifique dudit matériau inorganique étant supérieure d'au moins un facteur 100 à celle du métal et ledit métal n'étant pas supporté par ledit matériau inorganique.

11. Procédé selon la revendication 10, **caractérisé en ce que** le matériau inorganique est tel que défini dans l'une des revendications 6 à 9.

12. Procédé selon la revendication 10 ou 11, **caractérisé en ce que** le métal est tel que défini en revendications 2 à 4 et 9.

13. Procédé selon l'une des revendications 11 et 12, **caractérisé en ce que** le matériau inorganique et le métal sont directement introduits dans le milieu aqueux.

14. Procédé selon l'une des revendications 11 et 12 **caractérisé en ce que** l'on fait circuler le milieu aqueux à traiter à travers un lit fixe comprenant au moins le métal et le matériau inorganique.

15. Utilisation dans un procédé de génération d'hydrogène par réduction de l'eau à l'aide d'un métal de valence zéro, corrodable par l'eau d'un matériau inorganique à des fins de fixation de la ou des formes oxydes et/ou hydroxydes dudit métal générées lors de la réduction, la surface spécifique dudit matériau inorganique étant supérieure d'au moins un facteur 100 à celle du métal et ledit métal n'étant pas supporté par ledit matériau inorganique.

16. Application d'un système générateur d'hydrogène tel que défini dans l'une des revendications 1 à 9, pour une réaction nécessitant un apport continu en hydrogène.

17. Application d'un système générateur d'hydrogène tel que défini en revendications 1 à 9, pour l'hydrodéshalogénation des composés organiques halogénés volatils présents dans un milieu aqueux.

18. Procédé d'hydrodéshalogénation des composés organiques halogènes volatils présents dans un milieu aqueux, **caractérisé en ce qu'**il met en oeuvre une génération d'hydrogène par un système générateur d'hydrogène selon l'une des revendications 1 à 9 et une hydrodéshalogénation catalytique des composés organiques halogénés volatils à l'aide de l'hydrogène ainsi formé et d'un catalyseur convenable supporté.

19. Procédé selon la revendication 18, **caractérisé en ce que** le catalyseur d'hydrodéshalogénation comprend un métal choisi parmi le palladium, le nickel, le ruthénium, le platine et/ou le rhodium.

20. Procédé selon la revendication 19, **caractérisé en ce que** le métal est fixé sur un matériau inorganique tel que défini en revendications 6 à 7.

21. Procédé selon l'une des revendications 18 à 20, **caractérisé en ce que** le matériau inorganique présent dans le système générateur d'hydrogène est utilisé en quantité telle que sa surface développée est supérieure à la surface développée du matériau inorganique constituant le support du catalyseur d'hydrodéshalogénation.

22. Procédé selon l'une des revendications 18 à 21, **caractérisé en ce que** le catalyseur d'hydrodéshalogénation est du palladium supporté sur alumine et le métal de valence zéro du système générateur d'hydrogène est le fer.

23. Procédé selon la revendication 22, **caractérisé en ce que** le rapport massique palladium/fer est inférieur à 100 mg de palladium/kg de fer.

24. Procédé selon l'une des revendications 18 à 23, **caractérisé en ce que** le milieu aqueux est traité au sein d'un réacteur dans lequel le système générateur d'hydrogène est séparé du catalyseur d'hydrodéshalogénation.

## Patentansprüche

1. System zum Erzeugen von Wasserstoff, **dadurch gekennzeichnet, dass** es ein nullwertiges, durch Wasser korrodierbares Metall mit einem anorganisches Material verbindet, wobei das Material eine spezifische Oberfläche besitzt, die eine Fixierung der Oxidform oder Oxidformen und/oder der Hydroxidformen des Metalls begünstigt, die bei seiner Korrosion erzeugt werden, wobei die spezifische Oberfläche des anorganischen Materials um mindestens einen Faktor 100 größer als die des Metalls ist und das Metall nicht von dem anorganischen Material getragen wird.

2. System gemäß Anspruch 1, **dadurch gekennzeichnet, dass** das Metall ein negatives Redoxpotential besitzt.

3. System gemäß Anspruch 1 oder 2, **dadurch gekennzeichnet, dass** das Metall aus Stahl, Eisen, Zink, Aluminium, Zinn, Wismut, Kobalt und Nickel ausgewählt ist.

4. System gemäß einem der vorhergehenden Ansprüche, **dadurch gekennzeichnet, dass** das Metall Eisen ist.

5. System gemäß einem der vorhergehenden Ansprüche, **dadurch gekennzeichnet, dass** das anorganische Material aus gemischten oder nicht gemischten Metalloxiden ausgewählt ist.

6. System gemäß einem der vorhergehenden Ansprüche, **dadurch gekennzeichnet, dass** das anorganische Material aus Aluminiumoxiden, Siliziumdioxiden, Zirkoniumoxiden, Zer, Titan, Eisen und Zeolithen ausgewählt wird.

7. System gemäß einem der vorhergehenden Ansprüche, **dadurch gekennzeichnet, dass** das anorganische Material ein synthetischer oder natürlicher Zeolith ist.

8. System gemäß einem der vorhergehenden Ansprüche, **dadurch gekennzeichnet, dass** das anorganische Material ein Zeolith ist, der eine spezifische Oberfläche von größer als 10 m²/g besitzt.

9. System gemäß einem der vorhergehenden Ansprüche, **dadurch gekennzeichnet, dass** das Metall und das anorganische Material bezüglich des Gewichts des Metalls in einem Verhältnis von 0,5 Gew.-% bis 40 Gew.-% des Materials miteinander verbunden werden.

10. Verfahren zum Erzeugen von Wasserstoff durch Reduktion von Wasser mit Hilfe eines nullwertigen durch Wasser korrodierbaren Metalls, **dadurch gekennzeichnet, dass** die Reduktion in einer wässrigen Umgebung in Anwesenheit einer ausreichenden Menge eines anorganischen Materials erfolgt, dessen spezifische Oberfläche das Ablagern der Oxidform oder der Oxidformen und/oder Hydroxidformen des Metalls begünstigt, die während der Reduktion erzeugt werden, wobei die spezifische Oberfläche des anorganischen Materials um mindestens einen Faktor 100 größer als diejenige des Metalls ist und das Metall nicht von dem anorganischen Material getragen wird.

11. Verfahren gemäß Anspruch 10, **dadurch gekennzeichnet, dass** das anorganische Material wie in einem der Ansprüche 6 bis 9 definiert ist.

12. Verfahren gemäß Anspruch 10 oder 11, **dadurch gekennzeichnet, dass** das Metall wie in den Ansprüchen 2 bis 4 und 9 definiert ist.

13. Verfahren gemäß einem der Ansprüche 11 und 12, **dadurch gekennzeichnet, dass** das anorganische Material und das Metall direkt in die wässrige Umgebung eingeführt werden.

14. Verfahren gemäß einem der Ansprüche 11 und 12, **dadurch gekennzeichnet, dass** die zu behandelnde wässrige Umgebung durch ein Festbett zirkuliert wird, das zumindest das Metall und das anorganische Material umfasst.

15. Verwendung in einem Verfahren zum Erzeugen von Wasserstoff durch Reduktion von Wasser mit Hilfe eines nullwertigen durch Wasser korrodierbaren Metalls und eines anorganischen Materials zum Zweck des Fixierens der Oxidform oder Oxidformen und/oder Hydroxidformen des Metalls, die bei der Reduktion erzeugt werden, wobei die spezifische Oberfläche des anorganischen Materials um mindestens einen Faktor 100 größer als diejenige des Metalls ist und das Metall nicht von dem anorganischen Material getragen wird.

16. Anwendung eines Systems zum Erzeugen von Wasserstoff wie in einem der Ansprüche 1 bis 9 definiert für eine Reaktion, die eine kontinuierliche Wasserstoffzufuhr benötigt.

17. Anwendung eines Systems zum Erzeugen von Wasserstoff wie in den Ansprüchen 1 bis 9 definiert für die Hydrodehalogenierung der halogenisierten flüchtigen organischen Zusammensetzungen, die sich in einer wässrigen Umgebung befinden.

18. Verfahren zur Hydrodehalogenierung der halogenisierten flüchtigen organischen Zusammensetzungen, die in einer wässrigen Umgebung vorhanden sind, **dadurch gekennzeichnet, dass** es eine Erzeugung von Wasserstoff mittels eines Systems zum Erzeugen von Wasserstoff gemäß einem der Ansprüche 1 bis 9 und eine katalytische Hydrodehalogenierung der halogenisierten flüchtigen organischen Zusammensetzungen mit Hilfe des so gebildeten Wasserstoffs und eines geeigneten getragenen Katalysators durchführt.

19. Verfahren gemäß Anspruch 18, **dadurch gekennzeichnet, dass** der Hydrodehalogenierungskatalysator ein Metall umfasst, das aus Palladium, Nickel, Ruthenium, Platin und/oder Rhodium ausgewählt wird.

20. Verfahren gemäß Anspruch 19, **dadurch gekennzeichnet, dass** das Metall auf einem wie in den Ansprüchen 6 bis 7 definierten anorganischen Material fixiert wird.

21. Verfahren gemäß einem der Ansprüche 18 bis 20, **dadurch gekennzeichnet, dass** das anorganische Material, das in dem System zum Erzeugen von Wasserstoff vorhanden ist, in einer derartigen Menge verwendet wird, dass seine entwickelte Oberfläche größer als die entwickelte Oberfläche des anorganischen Materials ist, das den Träger des Hydrodehalogenierungskatalysators bildet.

22. Verfahren gemäß einem der Ansprüche 18 bis 21, **dadurch gekennzeichnet, dass** der Hydrodehalogenierungskatalysator auf Aluminiumoxid getragenes Palladium ist und das nullwertige Metall des Systems zum Erzeugen von Wasserstoff Eisen ist.

23. Verfahren gemäß Anspruch 22, **dadurch gekennzeichnet, dass** das Masseverhältnis von Palladium zu Eisen kleiner als 100 mg Palladium pro kg Eisen ist.

24. Verfahren gemäß einem der Ansprüche 18 bis 23, **dadurch gekennzeichnet, dass** die wässrige Umgebung in einem Reaktor behandelt wird, in dem das System zum Erzeugen von Wasserstoff von dem Hydrodehalogenierungskatalysator getrennt ist.

## Claims

1. Hydrogen generating system, **characterised in that** it combines an inorganic material with a water-corrodible metal of zero valency, said inorganic material having a specific surface area favourable to the fixation of the oxide and/or hydroxide form or forms of said metal generated during the corrosion thereof, wherein the specific surface area of said inorganic material is greater than that of the metal by at least a factor of 100 and said metal is not supported by said inorganic material.

2. System according to claim 1, **characterised in that** the metal has a negative oxidation reduction potential.

3. System according to claim 1 or 2, **characterised in that** the metal is selected from steel, iron, zinc, aluminium, tin, bismuth, cobalt and nickel.

4. System according to one of the preceding claims, **characterised in that** said metal is iron.

5. System according to one of the preceding claims, **characterised in that** the inorganic material is selected from mixed or non-mixed metal oxides.

6. System according to one of the preceding claims, **characterised in that** the inorganic material is selected from aluminium oxides, silicas, oxides of zirconium, cerium, titanium, iron, and zeolites.

7. System according to one of the preceding claims, **characterised in that** the inorganic material is a synthetic or natural zeolite.

8. System according to one of the preceding claims, **characterised in that** the inorganic material is a zeolite having a specific surface area greater than 10 m²/g.

9. System according to one of the preceding claims, **characterised in that** the metal and the inorganic material are combined in a proportion of 0.5 to 40% by weight of said material in relation to the weight of the metal.

10. Method for generating hydrogen by water reduction using a suitable water-corrodible metal of zero valency, **characterised in that** said reduction is carried out within an aqueous medium in the presence of a sufficient quantity of an inorganic material, the specific surface area of which is favourable to the deposition of the oxide and/or hydroxide form or forms of the metal generated during the course of said reduction, wherein the specific surface area of said inorganic material is greater than that of the metal by at least a factor of 100 and said metal is not supported by said inorganic material.

11. Method according to claim 10, **characterised in that** the inorganic material is as defined in one of claims 6 to 9.

12. Method according to claim 10 or 11, **characterised in that** the metal is as defined in claims 2 to 4 and 9.

13. Method according to one of claims 11 and 12, **characterised in that** the inorganic material and the metal are introduced directly into the aqueous medium.

14. Method according to one of claims 11 and 12, **characterised in that** the aqueous medium to be treated is caused to circulate through a fixed bed comprising at least the metal and the inorganic material.

15. Use of an inorganic material in a method for generating hydrogen by water reduction using a suitable water-corrodible metal of zero valency for the purposes of fixing the oxide and/or hydroxide form or forms of said metal generated during the reduction, wherein the specific surface area of said inorganic material is greater than that of the metal by at least a factor of 100 and said metal is not supported by said inorganic material.

16. Application of a hydrogen generating system as defined in one of claims 1 to 9 for a reaction that requires a continuous supply of hydrogen.

17. Application of a hydrogen generating system as defined in one of claims 1 to 9 for the hydrodehalogenation of volatile halogenated organic compounds present in an aqueous medium.

18. Method for the hydrodehalogenation of volatile halogenated organic compounds present in an aqueous medium, **characterised in that** it implements hydrogen generation using a hydrogen generating system according to one of claims 1 to 9 and catalytic hydrodehalogenation of the volatile halogenated organic compounds present using the hydrogen thus formed and a suitable supported catalyst.

19. Method according to claim 18, **characterised in that** the hydrodehalogenation catalyst comprises a metal selected from palladium, nickel, ruthenium, platinum an/or rhodium.

20. Method according to claim 19, **characterised in that** the metal is fixed on an inorganic material as defined in claims 6 to 7.

21. Method according to one of claims 18 to 20, **characterised in that** the inorganic material present in the hydrogen generating system is used in such a quantity that its developed surface is greater than the developed surface of the inorganic material forming the support for the hydrodehalogenation catalyst.

22. Method according to one of claims 18 to 21, **characterised in that** the hydrodehalogenation catalyst is palladium supported on aluminium oxide and the zero valency metal of the hydrogen generating system is iron.

23. Method according to claim 22, **characterised in that** the palladium/iron mass ratio is less than 100 mg of palladium/kg of iron.

24. Method according to one of claims 18 to 23, **characterised in that** the aqueous medium is treated within a reactor, in which the hydrogen generating system is separated from the hydrodehalogenation catalyst.
